# EUROPEAN PATENT SPECIFICATION

(11) **EP 3 108 741 B1**
(45) Date of publication and mention of the grant of the patent: **11.04.2018**
(21) Application number: 16175025.2
(22) Date of filing: 17.06.2016
(51) Int. Cl.: A01D 89/00

(54) **PICK-UP DEVICE OF A FORAGE IMPLEMENT**
AUFNAHMEVORRICHTUNG VON FUTTERMITTEL
DISPOSITIF DE PRÉHENSION D'UN INSTRUMENT DE FOURRAGE

(30) Priority: 22.06.2015 US 201562182871 P
(43) Date of publication of application: 28.12.2016
(73) Proprietor: Vermeer Manufacturing Company, Pella, IA 50219 (US)
(72) Inventor: WALKER, Ryan G., Reasnor, IA 50232 (US); COX, Nathan A., Pella, IA 50219 (US); KNEE, Alex, Urbandale, IA 50322 (US)
(74) Representative: Worthington, Richard Easton

(56) References cited:
- DE-A1-102006 001 338
- DE-U1- 8 515 118
- GB-A- 835 045
- US-A- 3 226 921
- US-B1- 8 181 435

## Description

### FIELD OF THE INVENTION

The field of the invention relates to a pick-up device of a forage vehicle or implement such as a round baler and, in particular, to a back-plate of the pickup device for attaching stripper bands for removing picked-up forage material from the pick-up device.

### BACKGROUND

Forage vehicles and implements have become an integral part of the agricultural industry. A variety of different types of vehicles and implements that process cut crops such as crop or forage harvesters (e.g., round or square balers) and windrow mergers are currently in use. Most forage harvesters use a pick-up device to pick up the crop forage material from the surface over which the harvester travels. The pick-up device typically includes a number of tines attached to a shaft or tine bar. The tines of the pick-up device rotate to allow the tines to engage and grasp forage material and to pick up and lift the crop material from the ground. At least some of the pick-up tines rotate through slots formed between adjacent stripper bands to remove picked-up forage material from the tines.

Conventional pick-up devices include stripper bands that are fastened, by use of fasteners (e.g., bolts, pins, keyhole fasteners and the like), at both ends thereof to the pick-up device.
DE102006001338 describes a pick up device with tines and strippers.

Maintenance of the pick-up device may include removing the stripper bands to access the tines and the tine bar. Field maintenance for a conventional pick-up device is difficult as the operator or service technician must position himself or herself below the pick-up device to unfasten the stripper bands and to fasten new stripper bands at their lower ends.

A need exists for forage material pick-up devices that may be maintained with greater ease and that nevertheless securely fasten the stripper bands.

This section is intended to introduce the reader to various aspects of art that may be related to various aspects of the invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

### SUMMARY

One aspect of the present invention is directed to a pick-up device for use on board of an agricultural vehicle or implement. The pick-up device includes a plurality of pick-up tines and a plurality of stripper bands each having a first end and a second end. The plurality of stripper bands defines slots between adjacent stripper bands for at least some of the pick-up tines to pass through during rotation of the tines. A back-plate defines a plurality of back-plate chambers. Each stripper band is received at its first end in a back-plate chamber.

Another aspect of the present invention is directed to a back-plate for securing a plurality of stripper bands belonging to a pick-up device. The pick-up device is arranged for being used on board of an agricultural vehicle or implement having a lengthwise axis. The back-plate comprises a plurality of teeth and a tab plate.

According to the invention the pick-up device has rotating pick-up tines for engaging and lifting forage material from a surface over which the vehicle or implement travels. The pick-up tines convey the lifted forage material around a rotational axis of the pick-up device. Every stripper band has a first end and a second end. The back-plate includes a plurality of teeth for engaging the stripper bands at their first ends to limit the movement of the stripper bands in a direction transverse to a lengthwise axis of the implement. The back-plate includes a tab plate for engaging the stripper bands at their first ends to limit vertical movement of the stripper bands.

According to the invention at least some of the pick-up tines protrude and pass through slots between adjacent stripper bands. Thereby the stripper bands contribute to remove picked-up loose material from the pick-up tines and help to avoid a jam or a blockade of the pick-up device.

The stripper bands need to be mounted at a frame of the pick-up device. It may be necessary to replace a broken or otherwise damaged stripper band with a new one, even outside of a workshop and on a field on which the harvester with the pick-up device is operated. Thanks to the invention it is not necessary to fix a stripper band at both ends. In contrast the first end is received in a chamber provided by the back-plate. This back-plate chamber restricts the possible movement of this stripper band during operation in two perpendicular directions and prevents an undesired movement of the stripper band, e.g. into a position in which a rotated pick-up tine hits this stripper band. As the stripper band is received in the back-plate chamber, it is not necessary that an operator or technician fix the first end of the stripper band. Fixing the first end may require non-ergonomic work, in particular if the first end is the lower end and is close to the ground. Thanks to the invention it suffices that the operators shifts the stripper band into the back-plate chamber and fixes the stripper band in a segment adjacent to the second end. This enables a more ergonomic work, in particular if the second end is the upper end and has a larger distance to the ground.

A further advantage: As the first end of a stripper band is received in a back-plate chamber and is not necessarily be fixed to the back-plate or further part of the pick-up device, the stripper band can easily give way if being hit by a rigid object.

According to the invention the provided back-plate chamber surrounds from at least two sides the segment of the stripper band adjacent to the first end. Therefor it is possible but not necessary that the stripper band is pressed against only one wall. In contrast the back-plate chamber restricts a possible movement of the stripper plate into at least two opposing directions.

Yet a further advantage of the invention is that it can be implemented on an existing vehicle or implement without large modifications. The existing pick-up tines and even the existing stripper bands can be re-used. Only a back-plate according to the invention has to be added.

Various refinements exist of the features noted in relation to the above-mentioned aspects of the present invention. Further features may also be incorporated in the above-mentioned aspects of the present invention as well. These refinements and additional features may exist individually or in any combination. For instance, various features discussed below in relation to any of the illustrated embodiments of the present invention may be incorporated into any of the above-described aspects of the present invention, alone or in any combination.

In one embodiment the back-plate comprises a plurality of teeth and a plurality of tabs. Preferably the teeth and the tabs are arranged in two parallel sequences. Every back-plate chamber is provided between a tooth and a tab. Preferably every back-plate chamber is arranged to receive a segment of exactly one stripper band such that the received stripper band segment is positioned between the tooth and the tab. This embodiment even better restricts the possible movements of a stripper band without the need of fixing the stripper band at its first end. It is also possible that one back-plate chamber can simultaneously receive several stripper bands.

In one implementation every stripper band has a base and two flanges. Thereby the stripper band has a U-shaped cross profile. A tooth of the back-plate is positioned between the two flanges of the same stripper band when the stripper band is received in a back-plate chamber. This implementation even better restricts the possible movements of a received stripper band.

In one implementation the back-plate comprises two separate parts. One part comprises the tabs for the back-plate chambers and preferably several fastening tabs at which the stripper band can be fastened. A further part comprises the teeth for the back-plate chambers. This implementation makes it easier to replace one part of the back-plate with a new one. It is possible that the vertical distance between the two parts of the back-plate can be changed. In one embodiment the tabs for the back-plate chambers and the fastening tabs belong to one rigid part.

### BRIEF DESCRIPTION OF THE DRAWINGS

Figure 1 is a perspective view of a forage vehicle shown as a round baler;
Figure 2 is a perspective cross-section view of the round baler of Fig. 1;
Figure 3 is a perspective view of a pick-up device of the round baler of Fig. 1;
Figure 4 is a perspective cross-section view of the pick-up device and of the conveying rotor of the baler of Fig. 1;
Figure 5 is a perspective view of a stripper band of the pick-up device of Fig. 4;
Figure 6 is a rear view of the stripper band of Fig. 5;
Figure 7 is a perspective view of a back-plate of the pick-up device of Fig. 4 in a descending viewing direction;
Figure 8 is another perspective view of the back-plate of Fig. 7 in an ascending viewing direction;
Figure 9 is a front view of the back-plate of Fig. 7 and Fig. 8 in a horizontal viewing direction;
Figure 10 shows in a side view the back-plate of Fig. 7 and Fig. 8 and a stripper band of Fig. 5 and Fig. 6;
Figure 11 shows a cross-section of the back-plate and of a stripper band taken through line 11-11 of Figure 10;
Figure 12 shows in a side view another embodiment of the back-plate and the stripper band; and
Figure 13 shows a cross-section of the back-plate and the stripper band taken through line 13-13 of Figure 12.

Corresponding reference characters indicate corresponding parts throughout the figures.

### DETAILED DESCRIPTION

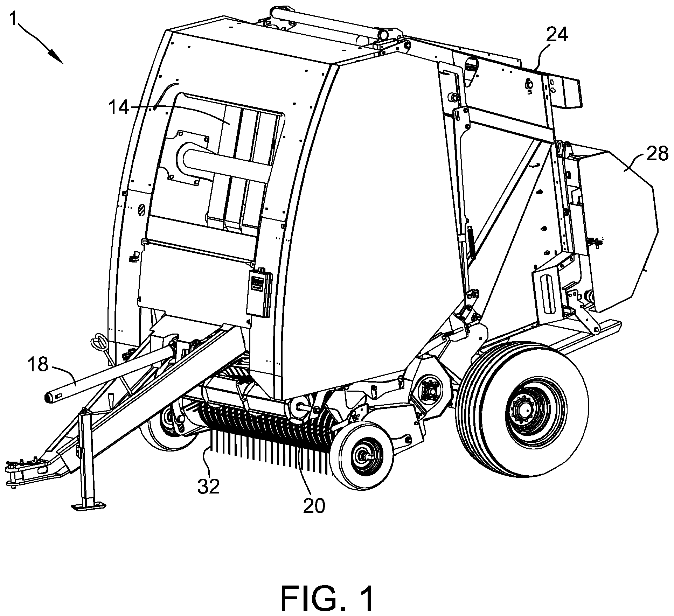

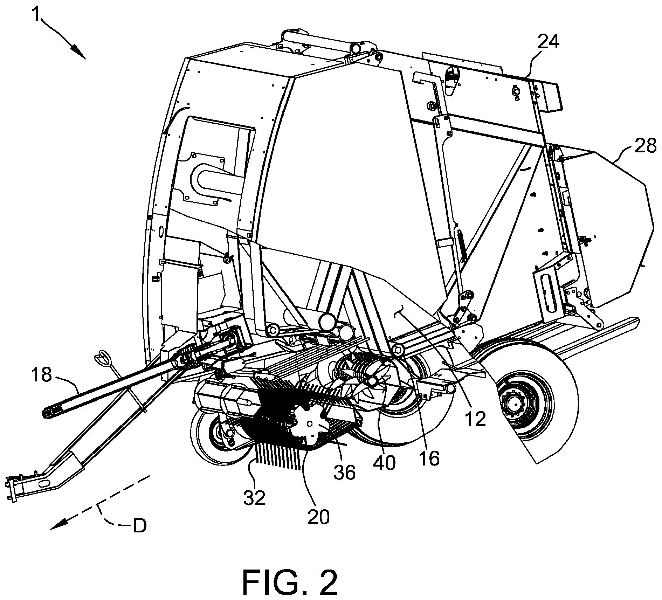

Referring now to Figures 1 and 2, an agricultural vehicle 1 for forming round-cylindrical bales from crop forage material is shown. While the vehicle 1 is generally shown and described herein as a round baler, any agricultural vehicle or implement that includes a pick-up device 20 having tines 32 and stripper bands 42 may be used, e.g. square balers, combine harvesters, field choppers, loader wagons, other crop or forage harvesters, rakes, swathers, tedders, windrow mergers.

The round baler 1 includes an expandable drum-shaped baling chamber 12 which operates by utilizing a series of endless bale forming belts 14 routed around a series of rollers 16. Alternatively, a single bale forming belt routed around the rollers 16 may be used. Additionally, the baler 1 includes two ground-engaging wheels, a towing unit, a PTO drive 18, a single or a plurality of belt tighteners (not shown) and a pivotal discharge gate (lift gate) 24.

The baler 1 is pulled by a propelled vehicle (not shown) over ground. The baler 1 includes a lengthwise axis D that corresponds to the direction of travel of the baler 1 over ground. As the baler 1 moves forward, crop material lying on the ground is engaged and is picked up by the pick-up device 20. As used herein, the term "crop material" includes any cut crop material that may be conducive to pick-up and subsequent baling or further processing and should not be limited to crop materials used by livestock.

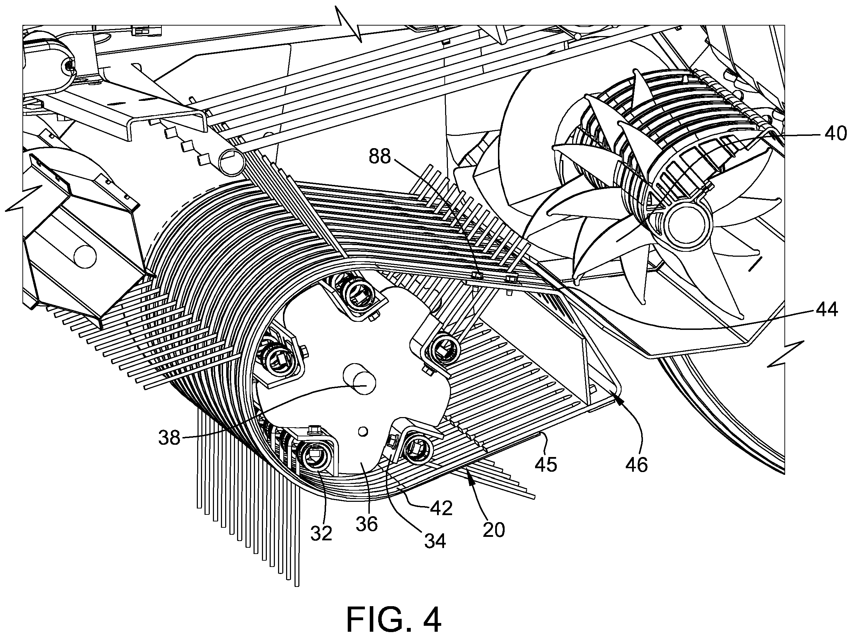

A conveying assembly with a sequence of rigid rotor teeth 40 operates in an undershot manner and feeds the lifted crop forage material toward the baling chamber 12 surrounded by the belts 14 (Fig. 2, Fig. 4) to allow the material to be incorporated into the growing bale (not shown). The picked-up crop material is conveyed through a feeding channel by the conveying assembly. The conveyed crop material is injected under pressure into the baling chamber 12.

As the crop material is injected and deposited in the baling chamber 12, the material is compressed by the plurality of bale forming belts 14. Tension is maintained in the bale forming belts 14 by the series of belt tighteners (not shown) to ensure a properly compressed bale.

Once a completed bale (not shown) is formed, pickup is ceased. Or further crop material is injected into a buffering chamber (not shown). Or the completed bale is transferred from the baling chamber 12into a wrapping chamber (not shown).

In every implementation a wrapping sequence is commenced by a wrapping device 28. The wrapping device 28 comprises an unrolling station for a supply reel of wrapping material and is configured to apply at least one layer of wrap material to the circumferential surface of the completed round-cylindrical bale in the baling chamber 12 or in the wrapping chamber. Once the wrapping sequence is completed, the operator let the completed and wrapped bale be ejected from the baling chamber 12 or from the wrapping chamber by triggering the discharge gate 24 to be opened.

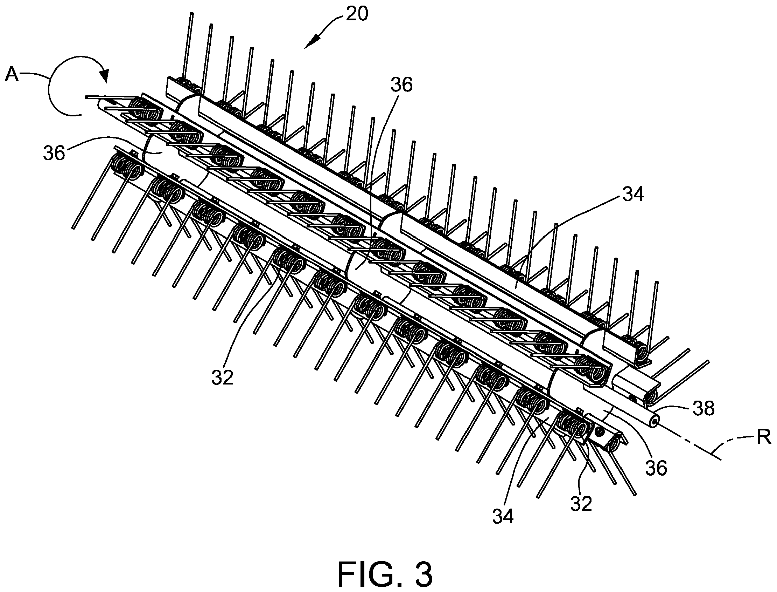

The pick-up device 20 (Fig. 3 with stripper bands not shown) includes a number of pick-up tines 32 for lifting crop forage material from the surface over which the baler 1 travels. The lifted crop material is transferred through the feeding channel into the baling chamber 12. As the pick-up tines 32 rotate about the axis of rotation R of the pick-up device 20 in the direction indicated by arrow A (in Fig. 1 to Fig. 4 clockwise), the tines 32 pick-up crop material and direct it toward the baling chamber 12 (Fig. 2).

The pick-up device 20 may include several rows of tines 32, as shown in Figure 3. The pick-up tines 32 can be moved along circles. Or the pick-up tines 32 may be provided in a staggered or "cammed" arrangement.

The pick-up device 20 includes three supporting disks 36 and a number of tine supports (shown as L-shaped tine bars) 34 to which the pick-up tines 32 are attached. Each tine bar 34 is attached to all three supporting disks 36. A shaft 38 is attached to at least one supporting disk 36 for rotation of the pick-up device 20 around the axis R.

The pick-up device 20 also includes a sequence of stripper bands 42 (Fig. 4). As the pick-up tines 32 rotate about the axis of rotation R (Fig. 3), the tines 32 pass through slots formed between adjacent stripper bands 42. The stripper bands 42 assist to strip and remove forage material from the pick-up tines 32 and convey it toward the conveying rotor assembly having the rigid rotor teeth 40.

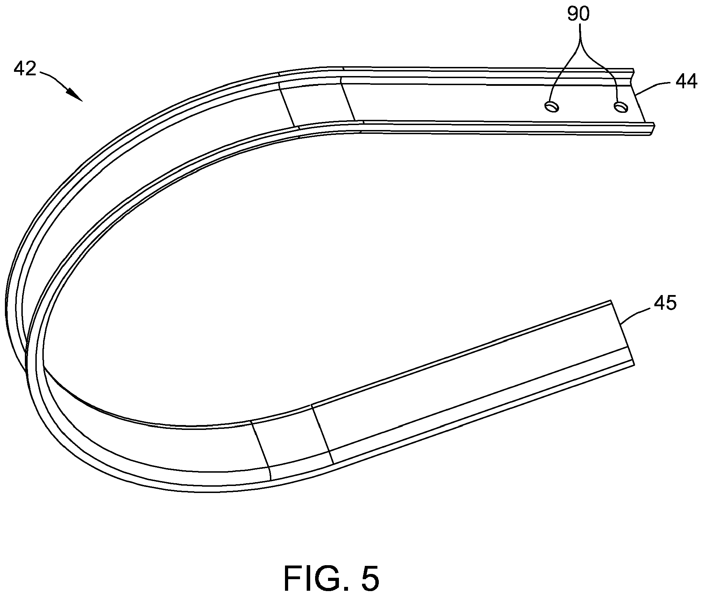

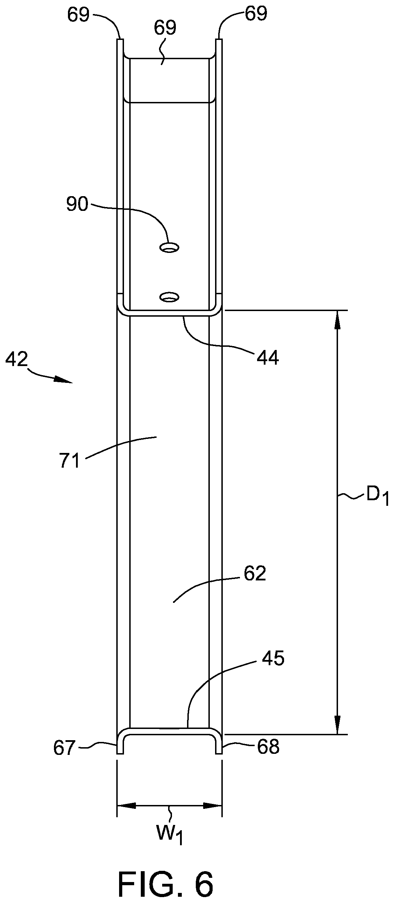

The stripper bands 42 are generally arcuate (e.g. U-shaped or horseshoe shaped). When being mounted, every stripper band 42 has a first (in the embodiment a lower) end 45 (Fig. 4, Fig. 5) and a second (upper) end 44 both pointing backwards towards the conveying assembly. Each stripper band 42 includes a base 62 (Fig. 6), a first flange 67, and a second flange 68. The flanges 67, 68 extend from the base 62. The base 62 is positioned between the flanges 67, 68. Therefore the stripper band 42 has a U-shaped cross section (Fig. 6). The base 62 and the flanges 67, 68 extend from the lower end 45 to the upper end 44.

The first flange 67 and the second flange 68 are separated by a distance W₁ (Fig. 6). The stripper band 42 is elastic such that the distance W₁ can be reduced against the retaining force of the stripper band 42. Each stripper band 42 includes outer contact surfaces 69 for contacting and separating forage material from the rotated pick-up tines 32 (Fig. 4). The stripper band 42 also includes an inner surface 71.

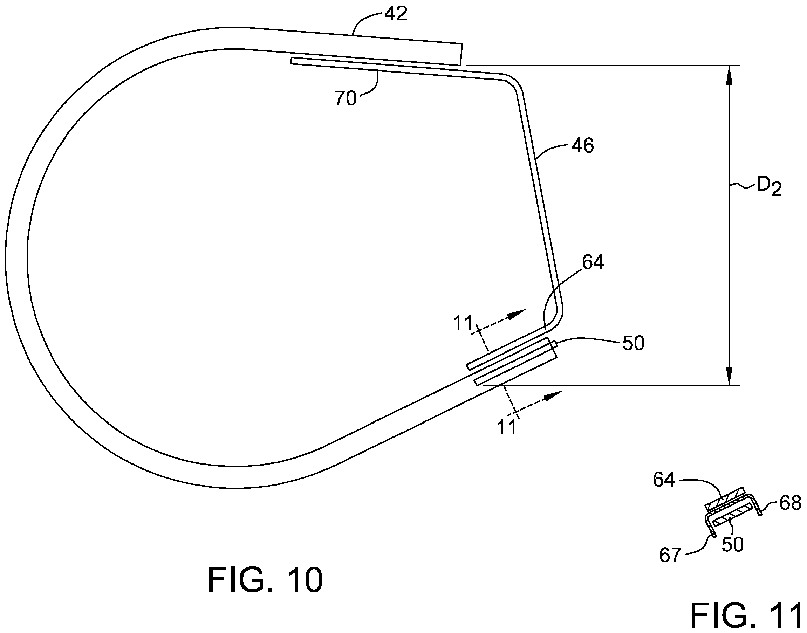

A distance D₁ separates the first (lower) end 45 from the second (upper) end 44 of the stripper band 42 (Fig. 6). This distance D₁ occurs in a vertical direction when the stripper band 42 is mounted. The band segments adjacent to the first end 45 and to the second end 44 may flare inwardly toward one another as shown in Figures 5 and 10 such that the loop portion of the stripper band 42 is wider (i.e., as measured at its greatest height which is in a vertical plane when the stripper band 42 is mounted) than the distance D₁ between its first end 45 and second end 44. A horseshoe shape is provided (Fig. 5).

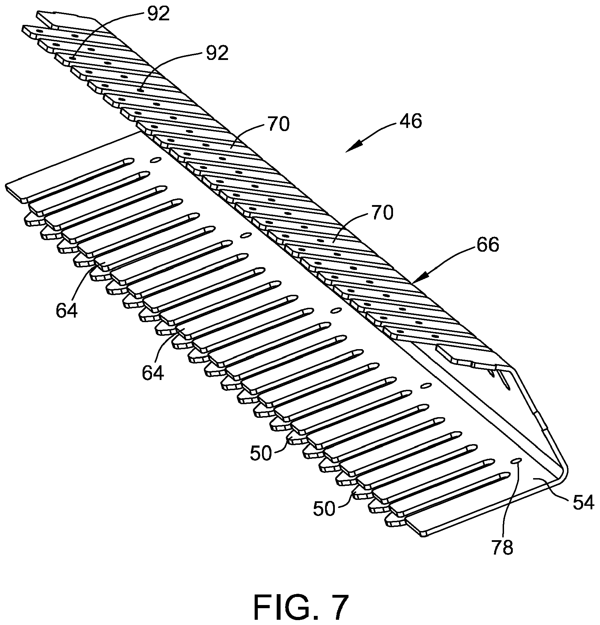

Each stripper band 42 is secured by a back-plate 46 (Fig. 4). The back-plate 46 carries the sequence of stripper bands 42. The back-plate 46 includes a sequence of teeth 50 (Figs. 7-9) for engaging the stripper bands 42 (Fig. 5) at their first (lower) end 45. The sequence of teeth 50 together form a tooth plate or "comb" 53. The flanges 67, 69 of a mounted stripper band 42 flank a corresponding tooth 50 from two sides. In this arrangement, the teeth 50 limit movement of the stripper bands 42 in both opposing directions transverse to the lengthwise axis D of the baler 1 (Fig. 1) and parallel to the ground.

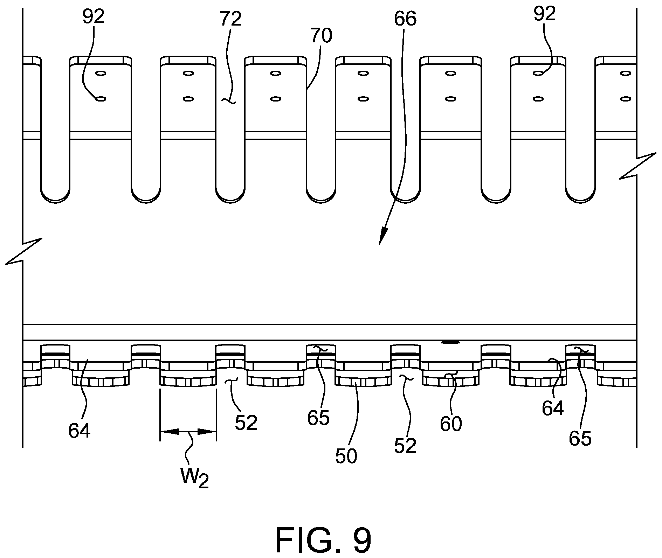

Each tooth 50 has a width W₂. The common or maximal width W₂ of the teeth 50 is substantially equal to or even less than the distance W₁ between the first flange 67 and the second flange 68 of the stripper band 42. This feature allows the tooth 50 to be positioned between the flanges 67, 68 of one stripper band 42 to laterally retain the stripper band 42. By arranging the width W₂ of the tooth 50 to be less than the distance W₁ between flanges 67, 68 (Fig. 11), each stripper band 42 may be slid within its corresponding chamber 60 (Fig. 9) when securing the stripper bands 42 to the back-plate 46 and during use of the baler 1 (e.g., when the stripper band 42 contacts the ground or an object protruding from the ground). In particular the stripper band 42 can give way if a rigid object hits the outer surface 69. The teeth 50 define teeth slots 52 between adjacent teeth 50 for enabling the pick-up tines 32 (Fig. 4) to pass through. In addition every tooth 50 restricts a vertical movement of the corresponding stripper band 42 downwards.

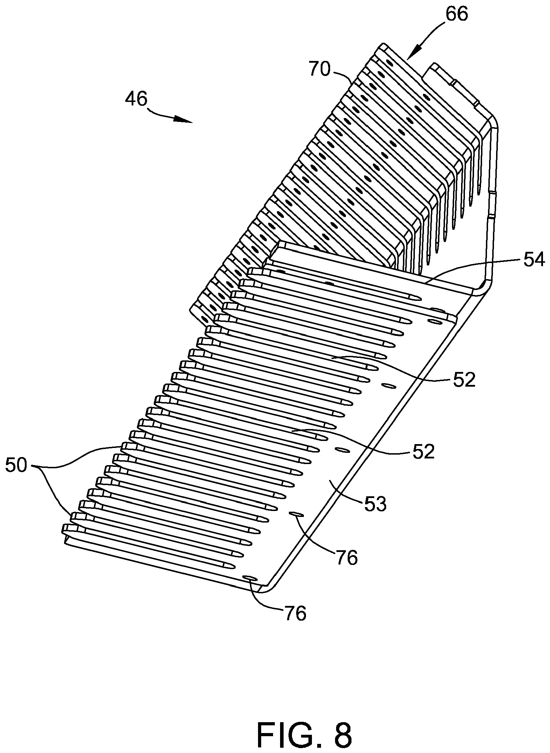

A tab plate 54 is positioned above the tooth plate 53 (Fig. 8). A sequence of tabs 64 (Fig. 7) of the tab plate 54 engage from above the stripper bands 42 (Fig. 5) at their first (lower) end 45 to limit vertical movement of the stripper bands 42 upwards (i.e., movement parallel to a vertical axis of the baler 1). In this arrangement, each tooth 50 and one corresponding tab 64 above this tooth 50 form the back-plate chamber 60 (Fig. 9) for receiving a lower segment of the stripper band 42. The stripper band 42 is secured within the back-plate chamber 60 between the tooth 50 and the tab 64 which limit movement of the stripper band 42 in a vertical as well as in a horizontal lateral direction. In the embodiment the stripper band 42 is not fastened to the tooth 50 or to the tab plate 54. According to the invention, a bolt or a pin, a key-hole fastener or the like is not used for fixing the first end 45. This feature allows the stripper band 42 to slide within the back-plate chamber 60. It is easier to apply or to remove the stripper band 42. In particular it is not necessary to apply or remove a fastener in a position closed to the ground.

In the embodiment the tooth plate 53 is not directly connected with the tab plate 54. In contrast the tab plate 54 and the tooth plate 53 both are mounted separately at two opposing side panels (not shown) of the pick-up device 20. In one implementation the vertical distance between the tab plate 54 and the tooth plate 53 can be changed. In one implementation it is possible to replace a tooth plate 53 with a new one without removing a stripper band 52 or even the tab plate 54.

The tabs 64 define tab plate slots 65 between the tabs 64 mounted at the tab plate 54 (Fig. 4, Fig. 9) for enabling the pick-up tines 42 to pass through during rotation. The tabs 64 and the teeth 50 are vertically aligned to form the sequence of back-plate chambers 60. The teeth slots 52 and the tab plate slots 65 are vertically aligned to enable the pick-up tines 32 to pass through.

In the illustrated embodiment the teeth 50 and the tab plate 54 are shown as having slots 52, 65 for the tines 32 to pass through. In an alternative implementation the teeth 50 and the tab plate 54 may be offset from the arc of rotation of the tines 32 (Fig. 4) such that slots 52, 65 are still possible but not used.

The back-plate 46 also includes a fastening plate 66 providing a sequence of fastening tabs 70 (Fig.9). In the embodiment the fastening plate 66 is rigidly connected with the tab plate 54 (Fig. 8). The stripper bands 42 are releasable attached to the fastening tabs 70 at their second (upper) ends 44 by means of several fasteners 88 (Fig. 4). The fastening tabs 70 define fastening plate slots 72 (Fig. 9) for the pick-up tines 32 (Fig. 4) to pass through. Fastening holds 90 are cut into a stripper band 42 near the second (upper) end 44 (Fig. 5). Corresponding fastening holds 92 are provided in a fastening tab 70 near its front edge (Fig. 9). A fastener 88 can be received by two fastening holds 90, 92.

In other embodiments, the fastening plate 66 is off-set from the arc of rotation of the pick-up tines 32 and does not include slots 72.

The ends of the fastening tabs 70 and the opening to the back-plate chamber 60 formed between the tabs 64 and teeth 50 are separated by a distance D₂ (Fig. 10). The back-plate 46 is attached to the side panels of the pick-up device 20 by a connecting plate (not shown) that is bolted to the side panels. In one implementation the tooth plate 53 is attached to the side panels separated from the assembly formed by the tab plate 54 and the fastening plate 66.

As shown in Figure 7, the fastening plate 66 and the back-plate chambers 60 formed between the tabs 64 and teeth 50 angle away from each other toward their ends at which the fastening plate 66 and the back-plate chambers 60 engage the stripper bands 42 (Fig. 4). By biasing the first end 45 and the second end 44 of a stripper band 42 inward toward each other as shown in Figures 5 and 10 and by biasing the back-plate chambers 60 and fastening tabs 70 away from one another, the stripper band 42, fastening tabs 70, tabs 64 and teeth 50 interact with one another in such a manner as to resist during operation an unintended pull-out of the stripper band 42 from its corresponding chamber 60 of the back-plate 46.

This mounting construction, in turn, especially when considered in conjunction with the lateral retention offered by the flanges 67, 68, may permit the use of fewer fasteners. Only one sequence of fasteners 88 are required which fix the stripper bands 42 at the fastening tabs 70 of the fastening plate 66, i.e. only one fastener 88 per stripper band 42. It is also possible to use several sequences of fasteners 88 for fixing the stripper bands 42 at the fastening plate 66, i.e. several fasteners 88 per stripper band 42. Fig. 5 shows two holds 90 for two fasteners 88.

In other embodiments, the fastening plate 66 angles toward the tab plate 54 and the tooth plate (comb) 53, or the fastening plate 66, tab plate 55 and the tooth plate (comb) 53 are parallel.

In the illustrated embodiment, the distance D₂ between the end of the fastening tabs 70 and the opening of the back-plate chamber 60 formed between the tabs 64 and the teeth 50 (Fig. 10) is greater than the distance D₁ between the first end 45 and the second end 44 of the stripper band 42 (Fig. 6). This creates an outward spring bias onto the stripper band 42 upon installation on the back-plate 46 which causes the stripper band 42 to apply a downward force on the corresponding tooth 50 which further resists unintended pull-out of the stripper band 42 from the back-plate chamber 60.

The tab plate 54 and the fastening plate 66 are illustrated as being one piece contacting from above the tooth plate (comb) 53 being fastened to the tab plate 54. In an alternative implementation the tab plate 54 may be spaced from the comb 53 by a shim plate (not shown) between the tab plate 54 and the comb 53. The comb 53 may be fastened through comb apertures 76 (Fig. 8) and tab plate apertures 78 (Fig. 7), optionally with an adjustable distance. In other embodiments, the comb 53 is integral with the tab plate 54 and/or the fastening plate 66; or the comb 53, tab plate 54, and fastening plate 66 are all separate pieces that are fastened together.

Alternatively or in addition to the back-plate 46 providing the back-plate chambers 60 to secure the first (lower) ends 45 of the stripper bands 42, the back-plate 46 may include chambers (not shown) for securing the stripper bands 42 at their second (upper) ends 44.

As shown in Fig. 4 and Fig. 10, the back-plate 46 is arranged such that the teeth 50 and the tab plate 64 are directed angularly downward toward the surface over which the round baler 1 travels at their ends. The fastening plate 66 is directed angularly upwards.

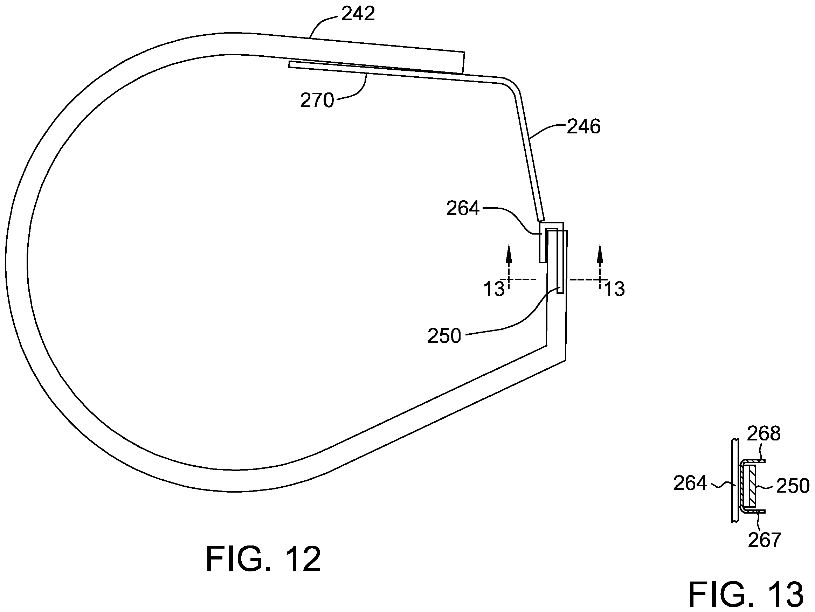

Another embodiment of the back-plate and the stripper bands is generally referred to as "242" and "246", respectively, in Figures 12-13. The components shown in Figures 12-13 that are analogous to those of Figures 1-11 are designated by the corresponding reference number of Figures 1-11 plus "200" (e.g., part 50 becomes 250). In the embodiment of Figures 12-13, the teeth 250 and the tab plate 264 are perpendicular to the surface over which the round baler 1 travels. The first end 245 of the stripper band 242 engage from below into the back-plate chamber 260.

As referred to herein, the "chambers" 60 of the back-plate 46 need not be enclosed on all sides and the term "chamber" should not be considered in a limiting sense. The shape of the back-plate chamber 60 (Fig. 9) formed between the tabs 64 (Fig. 7) and the tooth 50 (Fig. 8) generally corresponds to the shape of the portion of the stripper band 42 received therein, in the embodiment corresponds to a U-shaped segment provided by the base 62 and the flanges 67, 68 adjacent to the first end 45. The back-plate chambers 60 may generally be formed in any arrangement in which the chambers 60 have a shape capable of receiving the stripper band 42 (or a portion thereof) and limiting the movement of the stripper band 42 in a vertical direction and a direction transverse to the lengthwise axis D (Fig. 2) of the baler 1. The stripper band 42 may have a U-shaped cross-section as shown in Figure 6 or may have a different profile (e.g., circular cross-section). The stripper band 42 may include portions with different shapes. In some embodiments, the stripper band 42 includes a first portion with a contact surface for contacting the forage material and includes another portion(s) having a different shape for attachment to the back-plate 46. In particular it is possible that a segment close to the ground is smaller than a segment with a greater distance to the ground. This feature provides more space for a pick-up tine 32 to move laterally when contacting the ground.

Every stripper band 42 can individually be attached to the pick-up device 20. The stripper band 42 may be secured to the baler 1 by sliding the first end 45 (Fig. 4) of the band 42 through the back-plate chamber 60 (Fig. 9) formed between the teeth 50 and the tabs 64. During insertion, the tooth 50 is positioned between the first and second flanges 67, 68 of the band 42 and guides the stripper band 42 into the back-plate chamber 60. The stripper band 42 may be slid fully to the end of the tooth 50 or only partially inserted within the back-plate chamber 60. After insertion of the stripper band 42 into the back-plate chamber 60, the stripper band 42 may be fastened to the fastening plate 66 at its second end 44 by use of fasteners 88 (two shown in Fig. 4) secured through stripper band apertures or holds 90 (Fig. 5) and corresponding fastening plate apertures or holds 92 (Fig. 7).

Compared to conventional pick-up devices, the pick-up device 20 and the back-plate 46 of the present invention have several advantages. By securing all or at least some of the stripper bands 42 within several chambers 60 of the back-plate 46 at their first (in the embodiment: lower) ends 45 rather than fastening the stripper bands 42 at their first ends 45 to the back-plate 46, the stripper bands 42 may be attached and detached from the baler 1 easier, as the operator or technician does not need to manipulate fasteners from below the pick-up device 20. The stripper band 42 does not include any fastening elements at its first end 45 for attaching to the back-plate 46, which simplifies the manufacturing process of the stripper band 42 and the process of assembling the pick-up device 20. In some embodiments, the pick-up device 20 is compatible with and capable of receiving conventional stripper bands 42. In addition a stripper band 42 can more easily give way if being hit by a rigid object on the ground.

In embodiments in which first ends 45 and second ends 44 of the stripper bands 42 angle toward each other and the fastening plate 66 and the back-plate chambers 60 angle away from each other toward their ends at which the fastening plate 66 and the chambers 60 engage the stripper bands 42, unintended pull-out of a stripper band 42 from its corresponding chamber 60 of the back-plate 46 during operation may be resisted without the need of fixing the stripper band 42 at the first end. In embodiments in which the distance D₂ between the end of the fastening tabs 70 and the opening of the back-plate chamber 60 formed between the tabs 64 and teeth 50 is greater than the distance D₁ between the first end 45 and second end 44 of the stripper band 42, unintended pull-out of the stripper band 42 from its corresponding chamber 60 of the back-plate 46 may be resisted.

As used herein, the terms "about," "substantially," "essentially" and "approximately" when used in conjunction with ranges of dimensions, concentrations, temperatures or other physical or chemical properties or characteristics is meant to cover variations that may exist in the upper and/or lower limits of the ranges of the properties or characteristics, including, for example, variations resulting from rounding, measurement methodology or other statistical variation.

When introducing elements of the present invention or the embodiment(s) thereof, the articles "a", "an", "the" and "said" are intended to mean that there are one or more of the elements. The terms "comprising," "including," "containing" and "having" are intended to be inclusive and mean that there may be additional elements other than the listed elements. The use of terms indicating a particular orientation (e.g., "top", "bottom", "side", etc.) is for convenience of description and does not require any particular orientation of the item described.

As various changes could be made in the above constructions without departing from the scope of the invention, it is intended that all matter contained in the above description and shown in the accompanying drawing[s] shall be interpreted as illustrative and limited by the appended claims.

**LIST OF REFERENCE SIGNS**

| | |
|---|---|
| 1 | round baler, comprises the baling chamber 12, the belts 14, the rollers 16, the conveying assembly with the rotor teeth 40, and the pick-up device 20 |
| 12 | drum-shaped baling chamber of the round baler 1 |
| 14 | endless bale forming belts surround the baling chamber 12 |
| 16 | rollers for guiding the belts 14 |
| 20 | pick-up device of the baler 1, comprises a plurality of pick-up tines 32, several tine bars 34, three supporting disks 36, a sequence of stripper bands 42, 242, and the back-plate 46, 246 |
| 24 | pivotal discharge gate (tailgate) of the baler 1 |
| 28 | wrapping device of the baler 1 |
| 32 | pick-up tines of the pick-up device 20, mounted at the tine bars 34 |
| 34 | L-shaped tine bars to which the pick-up tines 32 are attached, mounted at the supporting disks 36 |
| 36 | rotated supporting disks for carrying the tine bars 34 |
| 38 | shaft for rotating the supporting disks 36 |
| 40 | rigid rotor teeth of the conveying rotor |
| 42, 242 | stripper band for removing crop material from the rotated pick-up tines 32, comprises a base 62, two flanges 67, 267, 68, 268, and two fastening holds 90 |
| 44 | second (upper) end of a stripper band 42, mounted at the fastening plate 66 by means of a fastener 88 |
| 45 | first (lower) end of a stripper band 42, received in a back-plate chamber 60 |
| 46, 246 | back-plate of the stripper band 42, comprises the tooth plate 53, the tab plate 54, and the fastening plate 66, mounted at side panels of the pick-up device 20 |
| 50, 250 | a teeth of the tooth plate (comb) 53, positioned between the flanges 67, 68 of a received stripper band 42 |
| 52 | slots between adjacent teeth 50 through which rotated pick-up tines 32 pass |
| 53 | tooth plate (comb), comprises a sequence of teeth 50 |
| 54 | tab plate positioned above the tooth plate 53, comprises a sequence of tabs 64 |
| 60 | back-plate chamber provided by a tooth 50 and a tab 64 above the tooth 50 for receiving a stripper band 42 |
| 62 | base of a stripper band 42, positioned between the flanges 67, 68, comprises fastening holds 90 |
| 64, 264 | tabs of the tab plate 54 |
| 65 | tab plate slots between adjacent tabs 64, are aligned with the teeth slots 52 |
| 66 | fastening plate of the back-plate 46, comprises a sequence of fastening tabs 70 |
| 67, 267 | first flange of a stripper band 42 |
| 68, 268 | second flange of a stripper band 42 |
| 69 | outer contact surfaces of a stripper band 42 |
| 70, 270 | fastening tabs of the fastening plate 66, comprises fastening holds 92 |
| 71 | inner surfaces of a stripper band 42 |
| 72 | slots between adjacent fastening tabs 70 |
| 76 | fastening apertures in the tooth plate (comb) 53 |
| 78 | fastening apertures in the tab plate 54 |
| 88 | fasteners, received in the fastening holds 90 and 92 |
| 90 | fastening holds of the stripper bands 42 |
| 92 | fastening holds in the fastening tabs 70 |
| A | direction in which the pick-up tines 32 are rotated around the axis R |
| D | lengthwise axis of the baler 1 |
| D₁ | distance between the ends 44 and 45 of a stripper band 42 |
| D₂ | distance between the ends of the fastenings tabs 70 and the opening to the chambers 60, the distance D₂ being larger than the distance D₁ |
| R | axis of rotation around which the pick-up tine 22 rotate |
| W₁ | distance between the flanges 67 and 68 of a stripper band 42 |
| W₂ | width of a tooth 50 |

## Claims

1. A pick-up device (20) for use on board of an agricultural vehicle or implement (1), the pick-up device (20) comprising:
a plurality of pick-up tines (32) for conveying forage material about a rotational axis (R) of the pick-up device (20);
a plurality of stripper bands (42, 242) each having a first end (45) and a second end (44), the stripper bands (42, 242) defining slots between the stripper bands (42, 242) for enabling at least some of the pick-up tines (32) to pass through during rotation of the pick-up tines (32); and
a back-plate (46, 246) that defines a plurality of back-plate chambers (60), wherein every back-plate chamber (60) is arranged such that a segment adjacent to the first end (45) of one stripper band (42) can be received in this back-plate chamber (60), the back-plate chamber (60) surrounding a segment of the received stripper band (42) from two opposing sides,
**characterised by**
the stripper bands (42, 242) not being fastened to the back plate (46, 246) at their first ends (45) to allow each stripper band (42, 242) to slide within the respective back-plate chamber (60).

2. The pick-up device (20) as set forth in claim 1 wherein the stripper bands-(42, 242) are arcuate.

3. The pick-up device (20) as set forth in claim 1 or claim 2 wherein the back- plate (46, 246) comprises:
a plurality of teeth (50) for engaging the stripper bands (42, 242) at their first end (45) to limit the movement of the stripper bands (42, 242) at least in a direction-transverse to a lengthwise axis (D) of the vehicle or implement (1), the teeth (50) defining slots (52) between the teeth (50) for the pick-up tines (32) to pass through during rotation; and
a tab plate (54) comprising a plurality of tabs (64) for engaging the stripper bands (42, 242) at their first ends (45) to limit vertical movement of the stripper bands (42, 242), the tabs defining slots (65) between the tabs (64) for the pick-up tines (32) to pass through during rotation, the teeth (50) and the tabs (64) forming the plurality of back-plate chambers (60) between them, the stripper bands (42, 242) not being fastened to the teeth (50) or the tab plate (54).

4. The pick-up device (20) as set forth in claim 3 wherein each stripper band (42, 242) has a base (62) and two flanges (67, 267, 68, 268) that extend from the base (62), each tooth (50) being positioned between the two flanges (67, 267, 68, 268) of a received stripper band (42).

5. The pick-up device (20) as set forth in claim 3 or claim 4 wherein the back-plate chambers (60) extend over the length of the tabs (64)

6. The pick-up device (20) as set forth in any one of claims 3 to 4 wherein the back-plate (46, 246) comprises a fastening plate (66), the stripper bands (42, 242) being attached to the fastening plate (66) at their second ends (44).

7. The pick-up device (20) as set forth in claim 6 wherein the fastening plate (66) and at least one of the tab plate (54) and the plurality of teeth (50) are a single piece.

8. The pick-up device (20) as set forth in claim 6 or claim 7 wherein the fastening plate (66) and each back-plate chamber (60) have ends to which the engaged stripper bands (42, 242) reach, the fastening plate (66) and the back-plate chambers (60) angling away from each other toward the ends of the fastening plate (66) and the back-plate chambers (60) to resist pull-out of a stripper band (42) from its corresponding back-plate chamber (60).

9. The pick-up device (20) as set forth any one of claims 6 to 8 wherein the first end (45) and the second end (44) of each stripper band (42) are separated by a distance (D1), the fastening plate (66) having an end at which the stripper bands (42, 242) are attached, the back-plate chamber (60) having an end to which a received stripper band (42, 242) reaches, there being a distance (D2) between the ends of the fastening plate (66) and of the back-plate chamber (60), the distance (D2) between the ends of the fastening plate (66) and of the back-plate chamber (60) being greater than the distance (D1) between the stripper band ends (45, 44) to resist pull-out of a received stripper band (42) from its corresponding back-plate chamber (60).

10. The pick-up device (20) as set forth in any one of claims 1 to 9 wherein the respective first end (45) of each stripper band (42) is a lower end and the second end (44) is an upper end relative to a vertical axis.

11. An agricultural vehicle (1) for picking-up crop material from the ground and processing it on board of the vehicle (1), the vehicle (1) comprising the pick-up device (20) of any one of claims 1 to 10.

## Patentansprüche

1. Aufnahmevorrichtung (20) zur Verwendung in einem landwirtschaftlichen Fahrzeug oder einer Anlage (1), wobei die Aufnahmevorrichtung (20) aufweist:
mehrere Aufnahmezinken (32) zum Transport von Futtermittelmaterial um eine Drehachse (R) der Aufnahmevorrichtung (20);
mehrere Abstreifbänder (42, 242), die jeweils ein erstes Ende (45) und ein zweites Ende (44) aufweisen, wobei die Abstreifbänder (42, 242) zwischen sich Einschnitte bilden, um zu ermöglichen, dass sich zumindest einige der Aufnahmezinken (32) während der Drehung der Aufnahmezinken (32) hindurch bewegen; und
eine Rückseitenplatte (46, 246), die mehrere Seitenplatten-Kammern (60) bildet, wobei jede Rückseitenplatten-Kammer (60) so angeordnet ist, dass ein Segment benachbart zu dem ersten Ende (45) eines Abstreifbandes (42) in dieser Rückseitenplatten-Kammer (60) aufnehmbar ist, wobei die Rückseitenplatten-Kammer (60) ein Segment des aufgenommenen Abstreifbandes (42) aus zwei gegenüberliegenden Seiten umschließt,
**dadurch gekennzeichnet, dass**
die Abstreifbänder (42, 242) mit ihren ersten Enden (45) nicht an der Rückseitenplatte (46, 246) befestigt sind, sodass jedes Abstreifband (42, 242) innerhalb der jeweiligen Rückseitenplatten-Kammer (60) verschiebbar ist.

2. Aufnahmevorrichtung (20) nach Anspruch 1, wobei die Abstreifbänder (42, 242) bogenförmig sind.

3. Aufnahmevorrichtung (20) nach Anspruch 1 oder Anspruch 2, wobei die Rückseitenplatte (46, 246) aufweist:
mehrere Zähne (S50) zum Eingreifen in die Streifbänder (42, 242) an deren ersten Enden (45) zur Begrenzung der Bewegung der Abstreifbänder (42, 242) zumindest in einer Richtung quer zu einer Längsachse (D) der Fahrzeugs oder der Anlage (1), wobei die Zähne (50) Einschnitte (52) zwischen sich zu bilden, so dass die Ausnahmezinken (32) während der Drehung hindurch treten; und
eine Schlaufenplatte (54) mit mehreren Schlaufen (64) zum Eingreifen in die Streifenbänder (42, 242) an deren ersten Enden (45) zur Begrenzung der vertikalen Bewegung der Streifenbänder (42, 242), wobei die Schlaufen Einschnitte (600) zwischen sich bilden, sodass die Aufnahmezinken (32) während der Drehung hindurch treten,
wobei die Zähne (50) und die Schlaufen (64) die mehreren Rückseitenplatten-Kammern (60) zwischen sich bilden, und wobei die Abstreifbänder (42, 242) an den Zähnen (50) oder der Schlaufenplatte (54) nicht befestigt sind.

4. Aufnahmevorrichtung (20) nach Anspruch 3, wobei jedes Abstreifband (42, 242) ein Basiselement (62) und zwei Flansche (67, 267, 68, 268), die sich von dem Basiselement (62) erstrecken, aufweist, wobei jeder Zahn (50) zwischen zwei Flanschen (67, 267, 68, 268) eines aufgenommenen Abstreifbandes (42) angeordnet ist.

5. Aufnahmevorrichtung (20) nach Anspruch 3 oder Anspruch 4, wobei die Rückseitenplatten-Kammern (60) sich über die Länge der Schlaufen (64) erstrecken.

6. Aufnahmevorrichtung (20) nach Anspruch 3 oder 4, wobei die Rückseitenplatte (46, 246) eine Befestigungsplatte (66) umfasst, und wobei die Abstreifbänder (42, 242) mit ihrem zweiten Enden (44) an der Befestigungsplatte (66) befestigt sind.

7. Die Aufnahmevorrichtung (20) nach Anspruch 6, wobei die Befestigungsplatte (66) und die Schlaufenplatte (54) und/oder die mehreren Zähne (50) ein einzelnes Materialstück sind.

8. Aufnahmevorrichtung (20) nach Anspruch 6 oder Anspruch 7, wobei die Befestigungsplatte (66) und jede Rückseitenplatten-Kammer (60) Enden aufweisen, zu denen die im Eingriff befindlichen Abstreifbänder (42, 242) sich erstrecken, wobei die Befestigungsplatte (66) und die Rückseitenplatten-Kammern (60) in Richtung zu den Enden der Befestigungsplatte (66) und den Rückseitenplatten-Kammern (60) winklig voneinander weg gerichtet sind, um dem Herausziehen eines Abstreifbandes (42) aus einer entsprechenden Rückseitenplatten-Kammer (60) Widerstand zu bieten.

9. Aufnahmevorrichtung (20) nach einem der Ansprüche 6 bis 8, wobei das erste Ende (45) und das zweite Ende (44) jedes Abstreifbandes (42) durch einen Abstand (D1) getrennt sind, die Befestigungsplatte (66) ein Ende aufweist, an welchem die Abstreifbänder (42, 242) befestigt sind, die Rückseitenplatten-Kammer (60) ein Ende hat, bis zu dem ein aufgenommenes Abstreifband (42, 242) sich erstreckt, wobei ein Abstand (D2) zwischen den Enden der Befestigungsplatte (66) und der Rückseitenplatten-Kammer (60) vorhanden ist, wobei der Abstand (D2) zwischen den Enden der Befestigungsplatte (66) und der Rückseitenplatten-Kammer (60) größer ist als der Abstand (D1) zwischen den Enden (45, 44) der Abstreifbänder, um einem aufgenommenen Abstreifband (42) beim Herausziehen aus seiner entsprechenden Rückseitenplatten-Kammer (60) Widerstand zu bieten.

10. Aufnahmevorrichtung (20) nach einem der Ansprüche 1 bis 9, wobei das entsprechende erste Ende (45) jedes Abstreifbandes (42) ein tieferes Ende und das zweite Ende (44) ein oberes Ende in Bezug auf eine vertikale Achse ist.

11. Landwirtschaftliches Fahrzeug (1) zur Aufnahme von Pflanzenmaterial aus dem Boden und zur Verarbeitung an Board des Fahrzeugs (1), wobei das Fahrzeug (1) die Aufnahmevorrichtung (20) nach einem der Ansprüche 1 bis 10 aufweist.

## Revendications

1. Dispositif de ramassage (20) destiné à être utilisé à bord d'un véhicule ou d'un instrument agricole (1), le dispositif de ramassage (20) comprenant :
une pluralité de fourchons de ramassage (32) pour acheminer le fourrage vers un axe de rotation (R) du dispositif de ramassage (20) ;
une pluralité de bandes de débourrage (42, 242) ayant chacun une première extrémité (45) et une seconde extrémité (44), les bandes de débourrage (42, 242) définissant des fentes entre les bandes de débourrage (42, 242) pour permettre au moins à certains des fourchons de ramassage (32) de passer à travers pendant la rotation des fourchons de ramassage (32) ; et
une plaque arrière (46, 246) qui définit une pluralité de chambres de plaque arrière (60), dans laquelle chaque chambre de plaque arrière (60) est disposée de telle sorte qu'un segment adjacent à la première extrémité (45) d'une bande de débourrage (42) peut être reçu dans cette chambre de plaque arrière (60), la chambre de plaque arrière (60) entourant un segment de la bande de débourrage (42) reçue de deux côtés opposés, **caractérisé en ce que**
les bandes de débourrage (42, 242) ne sont pas fixées à la plaque arrière (46, 246) à leurs premières extrémités (45) pour permettre à chaque bande de débourrage (42, 242) de glisser à l'intérieur de la chambre de plaque arrière (60) respective.

2. Dispositif de ramassage (20) selon la revendication 1, dans lequel les bandes de débourrage (42, 242) sont en forme d'arc.

3. Dispositif de ramassage (20) selon la revendication 1 ou la revendication 2, dans lequel la plaque arrière (46, 246) comprend :
une pluralité de dents (50) destinées à s'engager dans les bandes de débourrage (42, 242) à leur première extrémité (45) pour limiter le mouvement des bandes de débourrage (42, 242) au moins dans une direction transversale à un axe longitudinal (D) du véhicule ou de l'instrument (1), les dents (50) définissant des fentes (52) entre les dents (50) pour permettre le passage des fourchons de ramassage (32) pendant la rotation ; et
une plaque à pattes (54) comprenant une pluralité de pattes (64) destinées à s'engager dans les bandes de débourrage (42, 242) à leurs premières extrémités (45) pour limiter le mouvement vertical des bandes de débourrage (42, 242), les pattes définissant des fentes (65) entre les pattes (64) pour permettre aux fourchons de ramassage (32) de passer à travers pendant la rotation, les dents (50) et les pattes (64) formant la pluralité de chambres de la plaque arrière (60) entre elles, les bandes de débourrage (42, 242) n'étant pas fixées aux dents (50) ou à la plaque à pattes (54).

4. Dispositif de ramassage (20) selon la revendication 3, dans lequel chaque bande de débourrage (42, 242) a une base (62) et deux brides (67, 267, 68, 268) qui s'étendent à partir de la base (62), chaque dent (50) étant positionnée entre les deux brides (67, 267, 68, 268) d'une bande de débourrage (42) reçue.

5. Dispositif de ramassage (20) selon la revendication 3 ou la revendication 4, dans lequel les chambres de la plaque arrière (60) s'étendent sur la longueur des pattes (64).

6. Dispositif de ramassage (20) selon l'une quelconque des revendications 3 à 4, dans lequel la plaque arrière (46, 246) comprend une plaque de fixation (66), les bandes de débourrage (42, 242) étant fixées à la plaque de fixation (66) à leurs secondes extrémités (44).

7. Dispositif de ramassage (20) selon la revendication 6, dans lequel la plaque de fixation (66) et au moins une de la plaque à pattes (54) et de la pluralité de dents (50) sont une pièce unique.

8. Dispositif de ramassage (20) selon la revendication 6 ou la revendication 7, dans lequel la plaque de fixation (66) et chaque chambre de la plaque arrière (60) ont des extrémités pouvant être atteintes par les bandes de débourrage (42, 242) engagées, la plaque de fixation (66) et les chambres de la plaque arrière (60) formant un angle à l'opposé les unes des autres vers les extrémités de la plaque de fixation (66) et des chambres de la plaque arrière (60) pour résister à la sortie d'une bande de débourrage (42) de sa chambre de la plaque arrière (60) correspondante.

9. Dispositif de ramassage (20) selon l'une quelconque des revendications 6 à 8, dans lequel la première extrémité (45) et la seconde extrémité (44) de chaque bande de débourrage (42) sont séparées d'une distance (D1), la plaque de fixation (66) ayant une extrémité à laquelle les bandes de débourrage (42, 242) sont fixées, la chambre de la plaque arrière (60) ayant une extrémité pouvant être atteinte par une bande de débourrage (42, 242) reçue, une distance (D2) existant entre les extrémités de la plaque de fixation (66) et celles de la chambre de la plaque arrière (60), la distance (D2) entre les extrémités de la plaque de fixation (66) et celles de la chambre de la plaque arrière (60) étant plus grande que la distance (D1) entre les extrémités des bandes de débourrage (45, 44) pour résister à la sortie d'une bande de débourrage (42) reçue de sa chambre de la plaque arrière (60) correspondante.

10. Dispositif de ramassage (20) selon l'une quelconque des revendications 1 à 9, dans lequel la première extrémité respective (45) de chaque bande de débourrage (42) est une extrémité inférieure et la seconde extrémité (44) est une extrémité supérieure par rapport à un axe vertical.

11. Véhicule agricole (1) pour le ramassage de produits de récolte au sol et son traitement à bord du véhicule (1), le véhicule (1) comprenant le dispositif de ramassage (20) de l'une quelconque des revendications 1 à 10.
